# EUROPÄISCHE PATENTSCHRIFT

(11) **EP 2 949 975 B1**
(45) Veröffentlichungstag und Bekanntmachung des Hinweises auf die Patenterteilung: **29.03.2017**
(21) Anmeldenummer: 14169407.5
(22) Anmeldetag: 22.05.2014
(51) Int. Cl.: F16K 3/02

(54) **Explosionsschutzschieber zum Unterbrechen eines Fluidstroms in einer Rohrleitung**
Explosion protection gate valve for interrupting a fluid flow in a pipeline
Vanne guillotine destinée à interrompre un flux de fluide dans une conduite

(43) Veröffentlichungstag der Anmeldung: 02.12.2015
(73) Patentinhaber: Rico-Sicherheitstechnik AG, 9100 Herisau (CH)
(72) Erfinder: Zellweger, Daniel, 9056 Gais (CH); Hafner, Roland, 9240 Uzwil (CH); Aloi, Giuseppe Walter, 9443 Widnau (CH)
(74) Vertreter: Hepp Wenger Ryffel AG

(56) Entgegenhaltungen:
- EP-A1- 0 062 552
- US-A- 4 279 402
- US-A1- 2013 221 252

## Beschreibung

Die Erfindung betrifft einen Schnellschlussschieber, insbesondere einen Explosionsschutzschieber zum Unterbrechen eines Fluidstroms nach dem Oberbegriff der unabhängigen Ansprüche.

Solche Explosionsschutzschieber werden in Rohrleitungen und Anlagen verwendet, welche explosionsgefährdete Gase und/oder Stäube führen. Die Rohrleitung oder Anlage ist mit Druck- und/oder Flammensensoren ausgerüstet, welche eine Explosion erkennen und einen oder mehrere Gasgeneratoren, welcher eine Spreng- oder Gasladung enthalten, aktivieren. Durch den erzeugten Druck wird der Schieber geschlossen und so das Ausbreiten von Flammen und Druckwellen wirksam verhindert. Auch sind Explosionsschutzschieber bekannt, welche mit einer pneumatischen, hydraulischen und/oder mechanischen Speichervorrichtung, beispielsweise einer Druckfeder, betätigt werden.

Dabei wird die Verschlussplatte zunächst stark beschleunigt und anschliessend, beim Erreichen der Schliessstellung, abgebremst. Demzufolge muss die Verschlussplatte robust ausgeführt sein und darf, insbesondere beim Erreichen der Schliessstellung, nicht beschädigt werden, da sonst die Dichteigenschaften nicht genügten, um Flammen und Druckwellen zu unterbrechen.

Um die Verschlussplatte beim Erreichen der Schliessstellung zu dämpfen werden Ölkolbenbremsen eingesetzt, welche auch den Rückprall der Verschlussplatte nach dem Erreichen der Schliessstellung verhindern. Diese müssen nach einer Auslösung des Schiebers nicht ersetzt oder instandgehalten werden, sind jedoch in der Anschaffung sehr kostenintensiv. Alternativ ist es bekannt, z.B aus der US 3,980,094 oder US 6,131,594, ein Dämpfungselement in einem Anschlagbereich der Verschlussplatte anzuordnen. Das Dämpfungselement ist aus einem plastisch verformbaren Material und wird beim Aufprall der Verschlussplatte deformiert. Nach einer Auslösung des Schiebers muss das Dämpfungselement ersetzt werden, was oft mit einem erheblichen Aufwand verbunden ist.

Die US 2013/0221252 A1 zeigt einen Schnellschlussschieber mit einem integrierten Druckgasreservoir. Es sind Dämpfungskörper zum Dämpfen der Bewegung der Verschlussplatte vorgesehen. Die EP 0 062 552 A1 zeigt ein pyrotechnisch aktivierbares Schieberventil mit Dämpfungselementen in der Form von Bleizylindern. Die US 4 279 402 betrifft ein Explosionsschutzventil mit Dämpfungsblöcken aus Blei, welche die Schliessbewegung dämpfen.

Es ist daher Aufgabe der Erfindung, die Nachteile des Bekannten zu vermeiden und insbesondere einen Explosionsschutzschieber der eingangs genannten Art anzugeben, welcher eine gute Dämpfung der Verschlussplatte ermöglicht, kostengünstig herzustellen und zu unterhalten ist und kurze Schliesszeiten erlaubt.

Die Aufgabe wird mit einem Explosionsschutzschieber nach Anspruch 1 gelöst. Der erfindungsgemässe Explosionsschutzschieber zum Unterbrechen eines Fluidstroms in einer Rohrleitung umfasst ein Schiebergehäuse, eine im Schiebergehäuse verschiebbar zwischen einer Betriebsstellung und einer Schliessstellung gelagerte Verschlussplatte, wobei in der Schliessstellung die Verschlussplatte den Fluidstrom unterbricht, Mittel zum Bewegen der Verschlussplatte aus der Betriebsstellung in die Schliessstellung, und wenigstens einen Deformationskörper zum Dämpfen der Bewegung der Verschlussplatte. Der Deformationskörper ist dabei seitlich zwischen Schiebergehäuse und Verschlussplatte angeordnet. Damit ist gemeint, dass der Deformationskörper zwischen dem Schiebergehäuse und einem Bereich der Verschlussplatte angeordnet ist, welcher im Wesentlichen parallel zu einer Schliessrichtung der Verschlussplatte ist. Insbesondere ist die Verschlussplatte flächig ausgebildet mit einer umlaufenden Schmalseite, wobei zwei Abschnitte der Schmalseite jeweils im Wesentlichen parallel zur Schliessrichtung und zwei Abschnitte der Schmalseite im Wesentlichen senkrecht zur Schliessrichtung verlaufen. Der Deformationskörper ist somit zwischen dem Abschnitt der Schmalseite, welcher im Wesentlichen parallel zur Schliessrichtung verläuft, und dem Schiebergehäuse angeordnet.

Im Sinne der vorliegenden Erfindung wird mit "seitlich" der Bereich verstanden, welcher sich zwischen Schiebergehäuse und Verschlussplatte befindet und sich entlang einer Schliessrichtung der Verschlussplatte erstreckt.

Durch die Anordnung des Deformationskörpers seitlich der Verschlussplatte muss diese nicht insgesamt verstärkt werden, sondern nur in dem Bereich, wo die Verschlussplatte mit dem Deformationskörper zusammenwirkt. Das bewirkt auch, dass die Verschlussplatte leichter ausgeführt werden kann, was wiederum schnellere Schliesszeiten erlaubt. Ferner ist das Ersetzen des Deformationskörpers einfacher, weil durch die seitliche Anordnung dieser besser zugänglich wird. Zudem kann die Deformation des Deformationskörpers die Verschlussplatte in der Schliessstellung einklemmen und so ein Rückprallen der Verschlussplatte ggf. verhindern.

Im Sinne der vorliegenden Erfindung wird mit "Längsrichtung" eine Richtung parallel zu einer Schliessrichtung der Verschlussplatte verstanden.

Im Sinne der vorliegenden Erfindung wird mit "Querrichtung" eine Richtung quer zu einer Längsrichtung, welche in der Ebene der Verschlussplatte liegt, verstanden.

Der Deformationskörper kann aus einem plastisch oder elastisch verformbaren Material sein. Es ist ersichtlich, dass, je nach Dimensionen, Masse und Schliesszeit des Schiebers und der Verschlussplatte, dem Fachmann die bestens für diesen Zweck geeigneten Werkstoffe bekannt oder zu ermitteln sind.

Bevorzugt umfasst der Deformationskörper einen hohlen Körper. Es hat sich herausgestellt, dass Hohlkörper für das Dämpfen der Verschlussplatte besser geeignet sind als massive Körper.

Besonders bevorzugt umfasst der Deformationskörper ein Rohr, welches bevorzugt kreisförmig ist. Insbesondere kann der Deformationskörper als Rohr ausgebildet sein. Das ist besonders vorteilhaft, da auf Standardbauteile zurückgegriffen werden kann. Das Rohr ist besonders bevorzugt aus Aluminium oder einer Aluminiumlegierung gefertigt.

Bei einer bevorzugten Ausführungsform ist eine Rohrachse im Wesentlichen senkrecht zu einer Bewegungsrichtung der Verschlussplatte angeordnet. Bei einer solchen Anordnung werden die besten Dämpfeigenschaften des Deformationskörpers erreicht. Der Deformationskörper wird beim Auslösen des Schiebers zerquetscht oder die Wand des als Rohr ausgebildeten Deformationskörpers wird zumindest teilweise durchdrungen und geschnitten. Dabei wird ein grosser Teil der kinetischen Energie der Verschlussplatte vernichtet und die Verschlussplatte dabei beim Erreichen der Schliessstellung vollständig abgebremst.

Der Deformationskörper ist bevorzugt am Schiebergehäuse angebracht. Damit wird eine einfache Konstruktion ermöglicht, da der Deformationskörper bevorzugt nur in eine dafür im Schiebergehäuse vorgesehen Aufnahme eingesetzt werden muss. Es versteht sich, dass der Deformationskörper alternativ oder zusätzlich mit an sich bekannten Befestigungsmitteln angebracht werden kann.

Alternativ kann der Deformationskörper an der Verschlussplatte angebracht werden. Auch in diesem Fall wird der Deformationskörper an der Verschlussplatte gehalten. Wie oben betreffend das Schiebergehäuse erwähnt, kommen bekannte Befestigungsmittel in Frage.

Die Aufgabe der vorliegenden Erfindung wird ferner mit einem Explosionsschutzschieber nach Anspruch 8 gelöst.

Der erfindungsgemässe Explosionsschutzschieber zum Unterbrechen eines Fluidstroms in einer Rohrleitung umfasst ebenfalls ein Schiebergehäuse, eine im Schiebergehäuse verschiebbar zwischen einer Betriebsstellung und einer Schliessstellung gelagerte Verschlussplatte, wobei in der Schliessstellung die Verschlussplatte den Fluidstrom unterbricht, und Mittel zum Bewegen der Verschlussplatte aus der Betriebsstellung in die Schliessstellung. Der Explosionsschutzschieber kann zusätzlich einen Deformationskörper wie obenstehend beschrieben umfassen.

Im Schiebergehäuse ist ein Kompressionsraum vorhanden, welcher einem vorderen Innenraum des Schiebergehäuses benachbart angeordnet ist. Das beim Bewegen der Verschlussplatte in die Schliessstellung verdrängte Fluid kann in den Kompressionsraum strömen.

Es wird somit vermieden, dass in dem vorderen Innenraum ein zu hoher Druck entsteht, welcher das Schliessen der Verschlussplatte erschweren oder unmöglich machen kann.

Der Kompressionsraum ist bevorzugt stirnseitig des vorderen Innenraums angeordnet und mittels zweier Kanäle mit dem vorderen Innenraum fluidschlüssig verbunden.

Die Verschlussplatte ist vorzugsweise mit einer Dichtung versehen, welche bevorzugt an einem stirnseitigen Ende der Verschlussplatte angeordnet ist. Das stirnseitige Ende der Verschlussplatte erstreckt sich in Querrichtung und wird durch das Schiebergehäuse begrenzt. Somit wird die Abdichtung eines unter anderem von der Dichtung begrenzten Innenraums ermöglicht, welcher u.U. als Zylinderraum einer Kolben-Zylinder-Anordnung dient und zur Betätigung des Explosionsschutzschiebers notwendig ist. Die Verschlussplatte übernimmt dabei die Funktion des Kolbens.

Die Dichtung wird bevorzugt auf das Ende der Verschlussplatte gesteckt, wobei die Verschlussplatte bevorzugt mit Rastnasen zum Halten der Dichtung versehen ist. Die Dichtung kann somit sehr einfach aufgesetzt und ggf. entfernt werden, während die Rastnasen eine sichere Verbindung zwischen Dichtung und Verschlussplatte ermöglichen. Alternativ kann die Dichtung verklebt oder mit bekannten Befestigungsmitteln wie beispielsweise Schrauben, Bolzen und dgl. an der Verschlussplatte befestigt werden.

Die Dichtung ist bevorzugt aus einem Kunststoff, vorzugsweise Polytetrafluorethylen (PTFE), gefertigt.

Die Erfindung wird nachfolgend anhand eines bevorzugten Ausführungsbeispiels in Verbindung mit den Zeichnungen besser beschrieben. Es zeigen:
- Figur 1: eine perspektivische Ansicht eines Schnellschlussschiebers,
- Figur 2: eine perspektivische Ansicht des Schnellschlussschiebers der Figur 1 ohne oberes Gehäuseteil und mit offener Verschlussplatte,
- Figur 3: eine Draufsicht auf den Schnellschlussschieber der Figur 2,
- Figur 4: eine perspektivische Ansicht des Schnellschlussschiebers der Figur 1 ohne oberes Gehäuseteil und mit geschlossener Verschlussplatte,
- Figur 5: eine Draufsicht auf den Schnellschlussschieber der Figur 4,
- Figur 6: eine Schnittansicht in Längsrichtung durch den Schnellschlussschieber der Figur 4,
- Figur 7: eine Detailansicht des Details A der Figur 6,

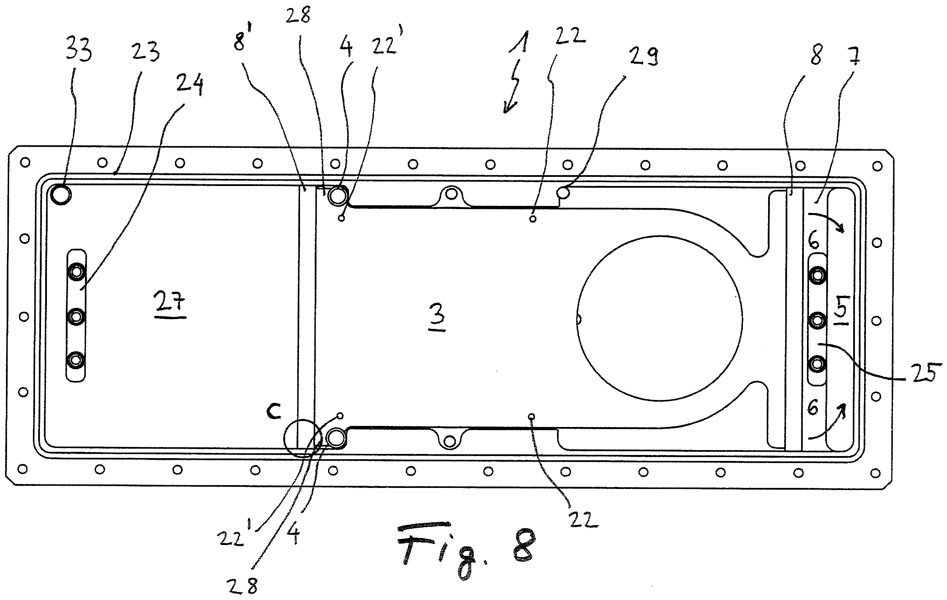

- Figur 8: eine Draufsicht auf einen Schnellschlussschieber ohne oberes Gehäuseteil nach einer Auslösung,
- Figur 9: eine Schnittansicht in Längsrichtung durch den Schnellschlussschieber der Figur 8,
- Figur 10: eine Detailansicht des Details B der Figur 9, und
- Figur 11: eine Detailansicht des Details C der Figur 8 ohne Dichtung.

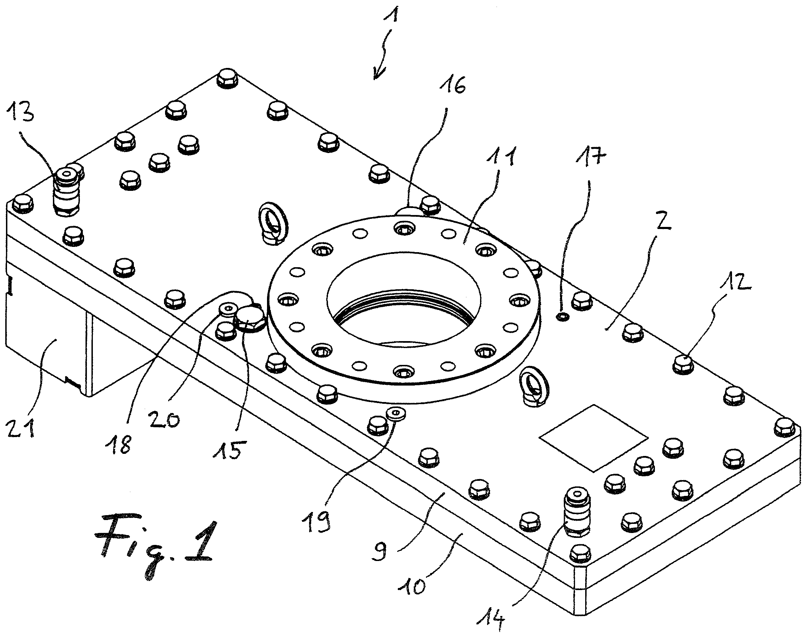

In der Figur 1 ist ein Schnellschlussschieber 1 dargestellt, welcher ein Schiebergehäuse 2 bestehend aus einem oberen und einem unteren Gehäuseteil 9 und 10 umfasst. Sowohl das obere Gehäuseteil 9 als auch das untere Gehäuseteil 10 (nicht sichtbar) weisen einen Flansch 11 zum Verbinden mit einer Rohrleitung auf.

Das obere Gehäuseteil 9 ist mit dem unteren Gehäuseteil 10 mittels einer Mehrzahl von Schrauben 12 verbunden, von denen der Übersichtlichkeit halber nur eine mit einem Bezugszeichen versehen ist.

Ferner sind Luftdruckanschlüsse 13 und 14 am oberen Gehäuseteil 9 angeordnet, welche zum Testen des Schnellschlussschiebers 1 verwendet werden. Die mit 15 und 16 bezeichneten Verschlussschrauben, die mit 17 bezeichnete Entlüftung, das mit 18 bezeichnete federnde Druckstück sowie die mit 19 und 20 bezeichneten Verschlussschrauben werden später erläutert.

Im Gehäuseteil 21 findet die Auslösevorrichtung des Schnellschlussschiebers 1 Aufnahme, welche vorzugsweise eine pyrotechnische Ladung zur Auslösung des Schnellschlussschiebers 1 ist. Alternativ kommen, wie eingangs bereits erwähnt, pneumatische, hydraulische oder mechanische Speichervorrichtungen zur Auslösung in Frage.

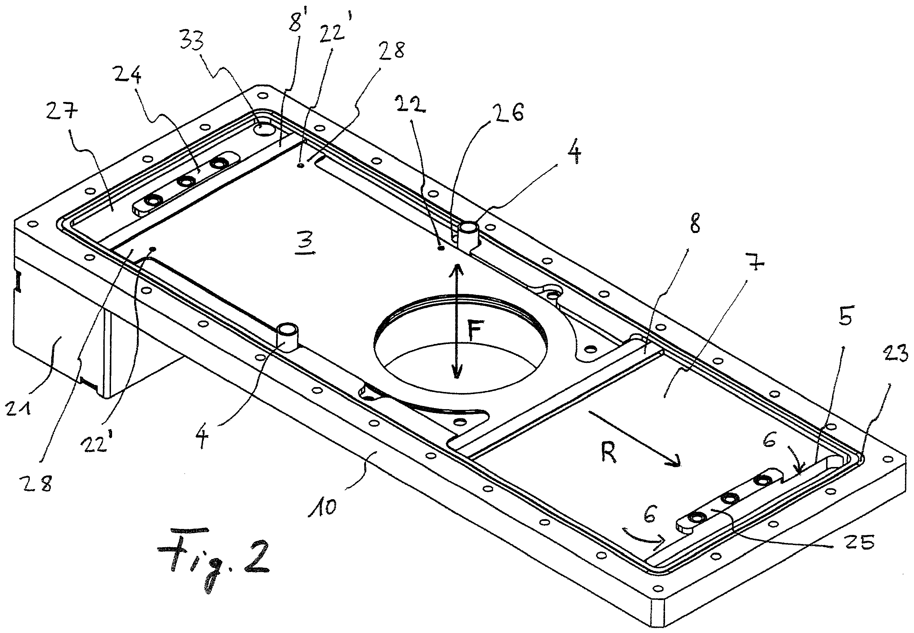

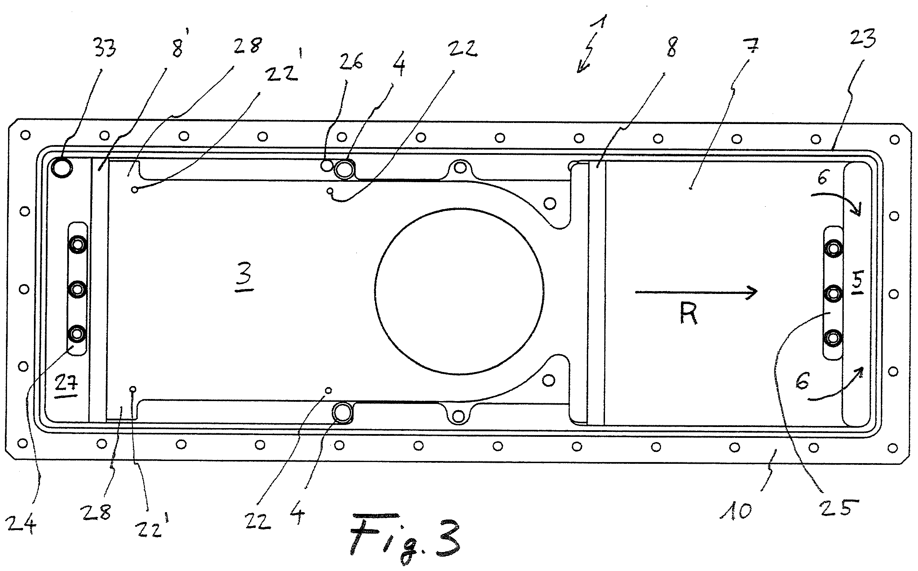

In den Figuren 2 und 3 ist der Schnellschlussschieber 1 ohne das obere Gehäuseteil 9 dargestellt. Sichtbar ist die Verschlussplatte 3, welche sich in der Betriebsstellung B befindet und einen Fluidstrom F ermöglicht. Die Verschlussplatte 3 ist aus einem dünnen Metallblech gefertigt und weist an ihren beiden Stirnseiten eine Dichtung 8 bzw. 8' auf. Die Durchgangsbohrungen 22 bzw. 22' wirken mit jeweils dem Druckstück 18 und verhindern, dass die Verschlussplatte 3, je nach Montageausrichtung, die Betriebsstellung B oder eine Teststellung T verlässt. Die Verschlussplatte 3 weist jeweils Durchgangsbohrungen 22 und 22' an ihren beiden Längsseiten auf, obwohl nur ein Paar von Drückstücken 18 an einer Längsseite des Schiebergehäuses 2 vorhanden ist. Damit wird erreicht, dass die Verschlussplatte 3 stets korrekt eingesetzt werden kann. Eine Fehlmontage ist somit ausgeschlossen.

Seitlich der Verschlussplatte 3 ist jeweils ein rohrförmiger Deformationskörper 4 angeordnet.

Die umlaufende Nut 23 nimmt im betriebsbereiten Zustand, d.h. wenn das Schiebergehäuse 2 geschlossen ist, eine nicht weiter dargestellte Dichtung auf. Die Öffnung 33 verbindet die pyrotechnische Ladung mit dem Inneren des Schiebergehäuses 2.

Die Stege 24 und 25 sind Verstärkungsbereiche des unteren Gehäuseteils 10 und vermeiden eine Bombage des oberen Gehäuseteils 9 bei Auslösung des Schnellschlussschiebers 1.

Die Entlüftung 17 umfasst ein Einwegventil, und ermöglicht einen Druckausgleich zwischen Innenraum und Umgebung.

Endschalter 26 und 29 ermöglichen eine Positionserfassung der Verschlussplatte.

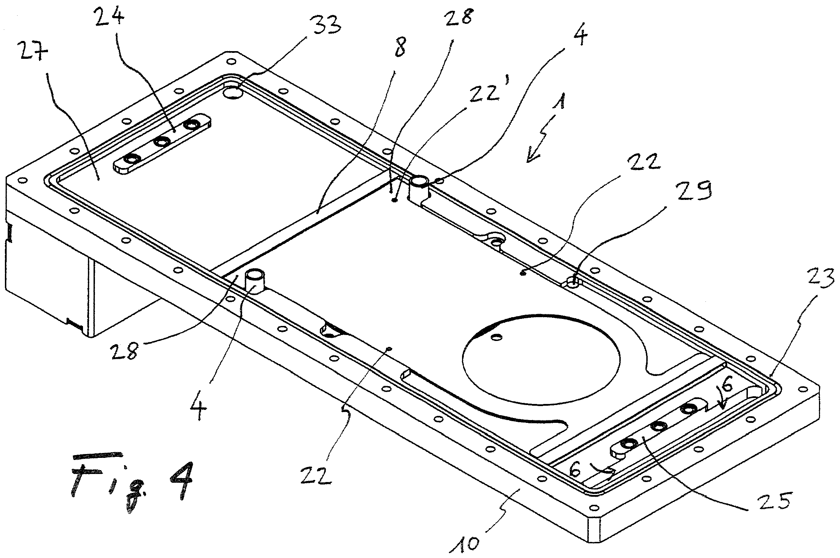

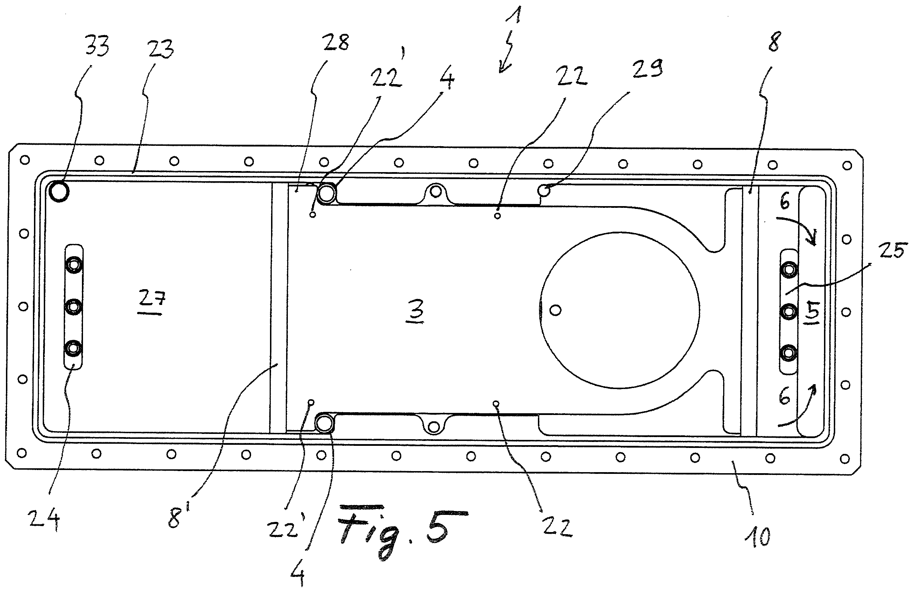

In den Figuren 4 und 5 ist entsprechend den Figuren 2 und 3 der Schnellschlussschieber 1 dargestellt, wobei die Verschlussplatte 3 sich nicht in der Betriebsstellung B sondern in der Teststellung T befindet. Diese Teststellung T der Verschlussplatte 3 dient nur Testzwecken und wird nur eingenommen, um die Funktionstüchtigkeit des Schnellschlussschiebers 1 zu überprüfen.

Dabei wird Druckluft über den Druckluftanschluss 13 in den hinteren Zylinderraum 27 gefördert, welche die Bewegung der Verschlussplatte in Richtung R verursacht. Der angelegte Druck beträgt bei diesem Ausführungsbeispiel zwischen 2 und 8 bar. Die Verschlussplatte 3 bewegt sich dann solange, bis die Anschlagsflügel 28 der Verschlussplatte 3 an dem jeweiligen Deformationskörper 4 anlegen. Beim Erreichen dieser Teststellung T rastet das Paar von Druckstücken 18 in die Durchgangsbohrung 22' ein und arretiert die Verschlussplatte 3.

Die Verschlussplatte 3 kann durch fördern von Druckluft über den Druckluftanschluss 14 in den vorderen Zylinderraum 7 wieder in die Betriebsstellung B gebracht werden. Auch in diesem Fall ermöglicht die Entlüftung 17 einen Druckausgleich.

Durch Entfernen der Verschlussschrauben 19 und 20 kann die Position der Verschlussplatte optisch überprüft werden. Wenn die Verschlussplatte 3 sich in der Betriebsstellung B befindet, ist diese durch die Gewindebohrung der Verschlussschraube 19 sichtbar, während durch die Gewindebohrung der Verschlussschraube 20 das untere Gehäuseteil 10 sichtbar ist. Umgekehrt verhält es sich, wenn die Verschlussplatte 3 die Teststellung T eingenommen hat.

Die Deformationskörper 4 können durch Entfernen der Verschlussschrauben 15 und 16 überprüft und ggf. ersetzt werden.

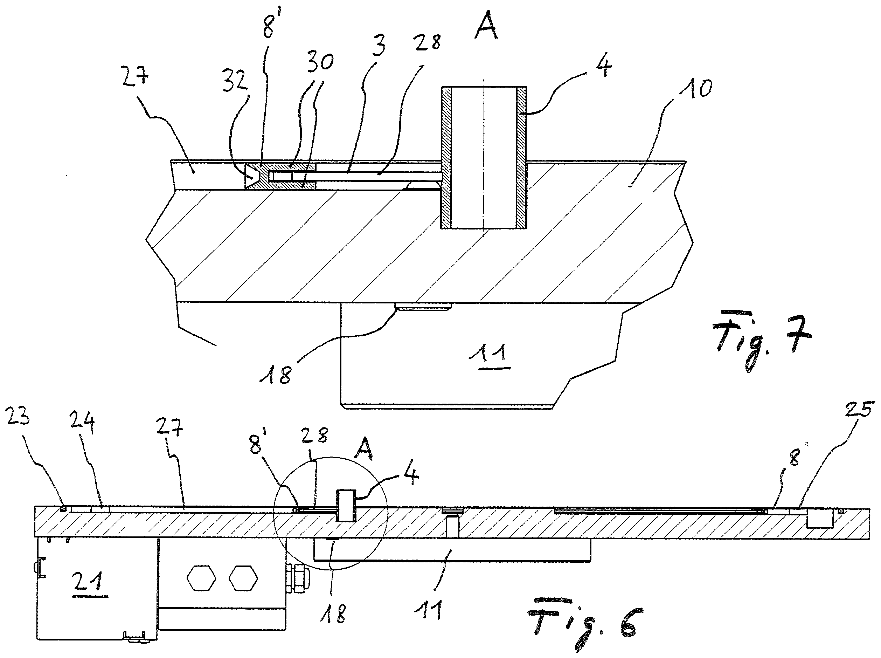

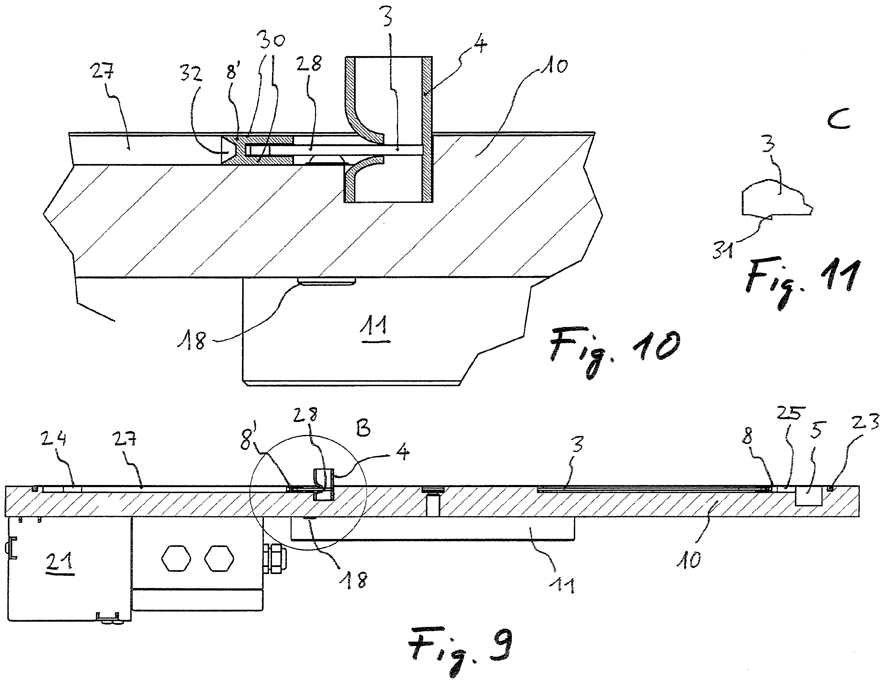

Die Dichtungen 8 und 8' sind aus Polytetrafluorethylen (PTFE) baugleich ausgeführt. Besser sichtbar sind diese in den Figuren 6, 7, 9 und 10, während in der Figur 11 eine Draufsicht der Verschlussplatte 3 ohne Dichtung 8' sichtbar ist.

Obwohl nachfolgend auf die Dichtung 8' Bezug genommen wird, gilt die Beschreibung entsprechend auch für die Dichtung 8.

Die Dichtung 8' umfasst zwei voneinander beabstandet angeordnete Schenkel 30, zwischen welchen die Verschlussplatte eingeschoben wird. Eine jeweils seitlich der Verschlussplatte 3 angeordnete, vorstehende Rastnase 31 sichert die Dichtung 8'.

Den Schenkeln gegenüberliegend weist die Dichtung 8' eine Vertiefung 32 auf, welche die Dichteigenschaften verbessert. Beim Auslösen des Schnellschlussschiebers 1 bewirkt der Druck in dem hinteren Zylinderraum 27, dass die Seitenwände der Vertiefung 32 auseinander gedrückt werden.

Die Funktionsweise des Schnellschlussschiebers 1 bei einer Auslösung wird nachfolgend erläutert.

Die Auslösung der pyrotechnischen Ladung bewirkt ein Strömen von Explosionsgasen durch die Öffnung 33 in den hinteren Zylinderraum 27. Bedingt durch den Druckanstieg wird die Verschlussplatte in Richtung R beschleunigt, bis die Anschlagflügel 28 das jeweilige Deformationskörper 4 berühren. Dies entspricht der Testposition T. Die hohe kinetische Energie der Verschlussplatte 3 bewirkt eine Deformation der Deformationskörper 4, welche die Verschlussplatte 3 abbremst und in den Figuren 9 und 10 schematisch dargestellt ist. Dabei wird ggf. die Verschlussplatte in der Schliessstellung S eingeklemmt, so dass ein Rückprall der Verschlussplatte 3 unmöglich ist. Zu vermerken ist, dass obwohl in den Figuren 9 und 10 der Deformationskörper 4 von der Verschlussplatte 3 als teilweise durchgeschnitten dargestellt ist, dies nicht notwendigerweise der Fall ist. Der Deformationskörper 4 kann auch zerquetscht werden oder komplett durchtrennt werden.

Wichtig ist, dass der Deformationskörper 4 in der Lage ist, die kinetische Energie der Verschlussplatte weitestgehend zu absorbieren.

Während der Bewegung der Verschlussplatte 3 in Richtung R wird die Luft, welche sich in dem vorderen Zylinderraum 7 befindet, komprimiert. Diese Luftkompression kann dazu führen, dass die Verschlussplatte 3 nach Erreichen der Schliessstellung S in einer der Schliessrichtung R entgegengesetzten Richtung bewegt wird oder im schlimmsten Fall die Schliessstellung S nicht erreicht, beides mit der Folge, dass die Rohrleitung nicht unterbrochen wird. Als Gegenmassnahme ist der Kompressionsraum 5 stirnseitig des vorderen Zylinderraums 7 angeordnet und mit diesem über die zwei schematisch mit den Pfeilen 6 dargestellten Kanäle verbunden. Der Kompressionsraum 5 ist derart dimensioniert, dass die von der Verschlussplatte 3 verdrängte Luft keinen zu grossen Druckanstieg verursacht.

## Patentansprüche

1. Schnellschlussschieber (1) zum Unterbrechen eines Fluidstroms (F) in einer Rohrleitung umfassend:
- ein Schiebergehäuse (2),
- eine im Schiebergehäuse (2) verschiebbar zwischen einer Betriebsstellung (B) und einer Schliessstellung (S) gelagerte Verschlussplatte (3), wobei in der Schliessstellung (S) die Verschlussplatte (3) den Fluidstrom (F) unterbricht,
- Mittel zum Bewegen der Verschlussplatte (3) aus der Betriebsstellung (B) in die Schliessstellung (S), und
- wenigstens einen Deformationskörper (4) zum Dämpfen der Bewegung der Verschlussplatte
**dadurch gekennzeichnet, dass**
der Deformationskörper seitlich in einem Bereich, welcher sich zwischen Schiebergehäuse (2) und Verschlussplatte (3) befindet und sich entlang einer Schliessrichtung der Verschlussplatte (3) erstreckt, angeordnet ist.

2. Schnellschlussschieber (1) nach Anspruch 1, **dadurch gekennzeichnet, dass** der Deformationskörper (4) einen hohlen Körper umfasst.

3. Schnellschlussschieber (1) nach einem der Ansprüche 1 oder 2, **dadurch gekennzeichnet, dass** der Deformationskörper (4) ein insbesondere kreisförmiges Rohr umfasst.

4. Schnellschlussschieber (1) nach Anspruch 3, **dadurch gekennzeichnet, dass** das Rohr (4) aus Aluminium oder einer Aluminiumlegierung besteht.

5. Schnellschlussschieber (1) nach einem der Ansprüche 3 oder 4, **dadurch gekennzeichnet, dass** eine Rohrachse im Wesentlichen senkrecht zu einer Bewegungsrichtung (R) der Verschlussplatte (3)angeordnet ist.

6. Schnellschlussschieber (1) nach einem der vorhergehenden Ansprüche, **dadurch gekennzeichnet, dass** der Deformationskörper (4) am Schiebergehäuse (2) angebracht ist.

7. Schnellschlussschieber (1) nach einem der Ansprüche 1 bis 5, **dadurch gekennzeichnet, dass** der Deformationskörper (4) an der Verschlussplatte (3) angebracht ist.

8. Schnellschlussschieber (1) nach einem der vorhergehenden Ansprüche,
**dadurch gekennzeichnet, dass** im Schiebergehäuse (2) ein Kompressionsraum (5) einem vorderen Innenraum (7) des Schiebergehäuses (2) benachbart angeordnet ist, in welchen das beim Bewegen der Verschlussplatte (3) in die Schliessstellung (S) verdrängte Fluid strömen kann.

9. Schnellschlussschieber (1) nach Anspruch 8, **dadurch gekennzeichnet, dass** der Kompressionsraum (5) stirnseitig des vorderen Innenraums (7) angeordnet ist und mittels zweier Kanäle (6) mit dem vorderen Innenraum (7) fluidschlüssig verbunden ist.

10. Schnellschlussschieber (1) nach einem der vorhergehenden Ansprüche, **dadurch gekennzeichnet, dass** die Verschlussplatte (3) mit wenigstens einer Dichtung (8, 8') versehen ist.

11. Schnellschlussschieber (1) nach Anspruch 10, **dadurch gekennzeichnet, dass** die Dichtung (8, 8') an einem stirnseitigen Ende der Verschlussplatte (3) angeordnet ist.

12. Schnellschlussschieber (1) nach Anspruch 11, **dadurch gekennzeichnet, dass** die Dichtung (8, 8') auf das Ende der Verschlussplatte (3) gesteckt ist.

13. Schnellschlussschieber (1) nach Anspruch 12, **dadurch gekennzeichnet, dass** die Verschlussplatte (3) mit Rastnasen (32) zum Halten der Dichtung (8, 8') versehen ist.

14. Schnellschlussschieber (1) nach einem der Ansprüche 10 bis 13, **dadurch gekennzeichnet, dass** die Dichtung (8, 8') aus einem Kunststoff, vorzugsweise Polytetrafluorethylen, gefertigt ist.

## Claims

1. Quick-closing sliding gate valve (1) for blocking a fluid flow (F) in a pipeline, comprising:
- a sliding gate valve housing (2),
- a sealing plate (3) which is movably mounted in the slide gate valve housing (2) between an operating position (B) and a closed position (S), wherein in the closed position (S) the sealing plate (3) blocks the fluid flow (F),
- means for moving the sealing plate (3) from the operating position (B) into the closed position (S), and
- at least one deformation body (4) for damping the movement of the sealing plate,
**characterized in that**
the deformation body is arranged at the side in a region which is located between sliding gate valve housing (2) and sealing plate (3) and which extends along a closing direction of the sealing plate (3).

2. Quick-closing sliding gate valve (1) according to Claim 1, **characterized in that** the deformation body (4) comprises a hollow body.

3. Quick-closing sliding gate valve (1) according to one of Claims 1 and 2, **characterized in that** the deformation body (4) comprises an especially circular tube.

4. Quick-closing sliding gate valve (1) according to Claim 3, **characterized in that** the tube (4) consists of aluminium or an aluminium alloy.

5. Quick-closing sliding gate valve (1) according to one of Claims 3 and 4, **characterized in that** a tube axis is arranged substantially perpendicular to a movement direction (R) of the sealing plate (3).

6. Quick-closing sliding gate valve (1) according to one of the preceding claims, **characterized in that** the deformation body (4) is attached on the sliding gate valve housing (2).

7. Quick-closing sliding gate valve (1) according to one of Claims 1 to 5, **characterized in that** the deformation body (4) is attached on the sealing plate (3).

8. Quick-closing sliding gate valve (1) according to one of the preceding claims,
**characterized in that** in the sliding gate valve housing (2) a compression chamber (5) is arranged adjacent to a front cylinder chamber (7) of the sliding gate valve housing (2), into which compression chamber the fluid which is displaced during the movement of the sealing plate (3) into the closed position (S) can flow.

9. Quick-closing sliding gate valve (1) according to Claim 8, **characterized in that** the compression chamber (5) is arranged on the end face of the front cylinder chamber (7) and is fluidically connected to the front cylinder chamber (7) by means of two passages (6).

10. Quick-closing sliding gate valve (1) according to one of the preceding claims, **characterized in that** the sealing plate (3) is provided with at least one seal (8, 8').

11. Quick-closing sliding gate valve (1) according to Claim 10, **characterized in that** the seal (8, 8') is arranged on an end-side face of the sealing plate (3).

12. Quick-closing sliding gate valve (1) according to Claim 11, **characterized in that** the seal (8, 8') is fitted on the end of the sealing plate (3).

13. Quick-closing sliding gate valve (1) according to Claim 12, **characterized in that** the sealing plate (3) is provided with locking tabs (32) for retention of the seal (8, 8').

14. Quick-closing sliding gate valve (1) according to one of Claims 10 to 13, **characterized in that** the seal (8, 8') is produced from plastic, preferably polytetrafluorethylene.

## Revendications

1. Vanne guillotine (1) permettant d'interrompre un courant de fluide (F) dans une conduite, comprenant:
- un corps de vanne (2),
- une plaque de fermeture (3) montée dans le corps de vanne (2) de façon coulissante entre une position de fonctionnement (B) et une position de fermeture (S), dans laquelle la plaque de fermeture (3) dans la position de fermeture (S) interrompt le courant de fluide (F),
- des moyens pour déplacer la plaque de fermeture (3) de la position de fonctionnement (B) à la position de fermeture (S), et
- au moins un corps déformable (4) pour amortir le mouvement de la plaque de fermeture,
**caractérisée en ce que** le corps déformable est disposé latéralement dans une région, qui se trouve entre le corps de vanne (2) et la plaque de fermeture (3) et qui s'étend le long d'une direction de fermeture de la plaque de fermeture (3).

2. Vanne guillotine (1) selon la revendication 1, **caractérisée en ce que** le corps déformable (4) comprend un corps creux.

3. Vanne guillotine (1) selon une des revendications 1 ou 2, **caractérisée en ce que** le corps déformable (4) comprend un tube, en particulier circulaire.

4. Vanne guillotine (1) selon la revendication 3, **caractérisée en ce que** le tube (4) se compose d'aluminium ou d'un alliage d'aluminium.

5. Vanne guillotine (1) selon une quelconque des revendications 3 ou 4, **caractérisée en ce qu'**un axe du tube est disposé essentiellement perpendiculairement à une direction de déplacement (R) de la plaque de fermeture (3).

6. Vanne guillotine (1) selon l'une quelconque des revendications précédentes, **caractérisée en ce que** le corps déformable (4) est installé sur le corps de vanne (2)

7. Vanne guillotine (1) selon l'une quelconque des revendications 1 à 5, **caractérisée en ce que** le corps déformable (4) est installé sur la plaque de fermeture (3).

8. Vanne guillotine (1) selon l'une quelconque des revendications précédentes, **caractérisée en ce qu'**une chambre de compression (5) est disposée dans le corps de vanne (2) à proximité d'une chambre intérieure antérieure (7) du corps de vanne (2), dans laquelle le fluide refoulé par le déplacement de la plaque de fermeture (3) dans la position de fermeture (S) peut s'écouler.

9. Vanne guillotine (1) selon la revendication 8, **caractérisée en ce que** la chambre de compression (5) est disposée du côté frontal de la chambre intérieure antérieure (7) et est reliée en écoulement de fluide à la chambre intérieure antérieure (7) au moyen de deux canaux (6).

10. Vanne guillotine (1) selon l'une quelconque des revendications précédentes, **caractérisée en ce que** la plaque de fermeture (3) est munie d'au moins un joint d'étanchéité (8, 8').

11. Vanne guillotine (1) selon la revendication 10, **caractérisée en ce que** le joint d'étanchéité (8, 8') est disposé sur une extrémité côté frontal de la plaque de fermeture (3).

12. Vanne guillotine (1) selon la revendication 11, **caractérisée en ce que** le joint d'étanchéité (8, 8') est engagé sur l'extrémité de la plaque de fermeture (3).

13. Vanne guillotine (1) selon la revendication 12, **caractérisée en ce que** la plaque de fermeture (3) est munie d'ergots d'encliquetage (32) destinés à maintenir le joint d'étanchéité (8, 8').

14. Vanne guillotine (1) selon l'une quelconque des revendications 10 à 13, **caractérisée en ce que** le joint d'étanchéité (8, 8') est fabriqué en une matière synthétique, de préférence en polytétrafluoroéthylène.
